Europäisches Patentamt

European Patent Office

Office européen des brevets

(11) Publication number: 0 316 173
A1

# (12) EUROPEAN PATENT APPLICATION

(21) Application number: 88310597.5

(22) Date of filing: 10.11.88

(51) Int. Cl.⁴: G 01 N 15/00

(30) Priority: 10.11.87 GB 8726304
10.11.87 GB 8726305
10.11.87 GB 8726306

(43) Date of publication of application:
17.05.89 Bulletin 89/20

(84) Designated Contracting States: ES GR

(71) Applicant: The Secretary of State for Defence in Her
Britannic Majesty's Government of the United Kingdom
of Great Britain and
Northern Ireland Whitehall
London SW1A 2HB (GB)

(72) Inventor: Ludlow, Ian Keith
Parkway Close
Welwyn Garden, City Hertfordshire (GB)

Kaye, Paul Henry
1 Coppers Close
Kimpton, Hertfordshire (GB)

Enles, Nicolas Alan
32 Broom Grove
Knebworth, Hertfordshire SG3 6BQ (GB)

(74) Representative: Beckham, Robert William et al
Procurement Executive Ministry of Defence Patents
1A(4), Room 2014
Empress State Building Lillie Road London SW6
1TR (GB)

(54) Particle monitoring system.

(57) A particle monitoring system to monitor certain properties of individual particles particularly as a function of time. Separate particle monitors (1) record and store data, each having their own key-pad and visual display unit. The data is read and processed by the central master computer (2), which represents the data graphically as a function of time and/or location.

Fig.1

EP 0 316 173 A1

Bundesdruckerei Berlin

## Description

### PARTICLE MONITORING SYSTEM

This invention relates to a particle monitoring system, in particular a system for monitoring temporal changes in the size and population spectra of particles in a given fluidic environment.

In the context of the present invention, the term 'particles' is intended to apply to both solid bodies and drops of liquid.

Particle analysers are known for example, as described in UK Patent Application No 2022816A in which the size and, to a certain extent, shape of the ambient particles can be determined.

Many such analysers make use of the scattering of light by a particle passing through a beam of radiation. These provide useful data on the properties of particles at a given location.

In the case of airborne particles it is useful to have information on the particles at various locations through which the fluid concerned is spread, and particularly to have information as to the change in various properties of the particles, for example size and population, as a function of time.

A present monitoring system is described in UK Application No GB 2132767A which employs a number of monitoring devices set at separate locations and a receiving means to respond to signals from the monitoring devices. The system is more specific to the measuring of water content and has the disadvantage of not giving any information as to temporal changes in the moisture content of the medium in which the monitoring devices are placed, but merely gives readings taken by the separate monitors over very short periods of time. A further disadvantage of this system is that the monitors themselves cannot store information and so have to be connected up separately to the central receiving unit where the information is stored.

There is therefore a need for a monitoring system for monitoring the properties of individual particles in a fluidic environment and which gives information on the temporal changes of such properties as well as a function of location and which has the added advantage of including remote intelligent monitors.

According to the present invention a particle monitoring system includes a plurality of independent particle monitors spatially separated and under the control of a master computer, wherein each particle monitor employs laser light scattering techniques for detecting and analysing individual particles in its vicinity, and stores the results over a given time period, the stores results being readable by the master computer for processing functions.

The processing functions may include the representation of the stores results as a function of time and/or location in graphical form.

Thus temporal and spatial changes in various parameters, such as size and population of the particles in an environment can be recorded and analyzed by the system.

With regard to the individual monitors they may take any suitable form but preferably each comprises a first scatter chamber including a first concave reflector, a sample of fluid in the form of a laminar flow intercepting at right angles a beam of radiation at the focal point of the first concave reflector, and a second chamber leading from an aperture in the first chamber. Light scattered by the individual particles in the sample is directed towards radiation collectors, converted into electrical signals, and analysed. Such monitors are further disclosed in co-pending Applications by the same inventors.

With a number of such monitors spatially separated but operating in synchrony, the behaviour of aerosols in terms of changes in population density, size distribution, and dispersion rates can be analysed as a function of time.

The system may have a present alarm capability, so that when the system detects given conditions, an audible or visual alarm is triggered.

An embodiment of the invention will now be described by way of example only with reference to the accompanying drawings of which :-

Fig 1 is a schematic diagram of the deployment of several Particle Monitors in communication with a Central Master Computer.

Fig 2 is a schematic diagram of a single Monitor.

Fig 3 is a schematic diagram of the electronic processing system.

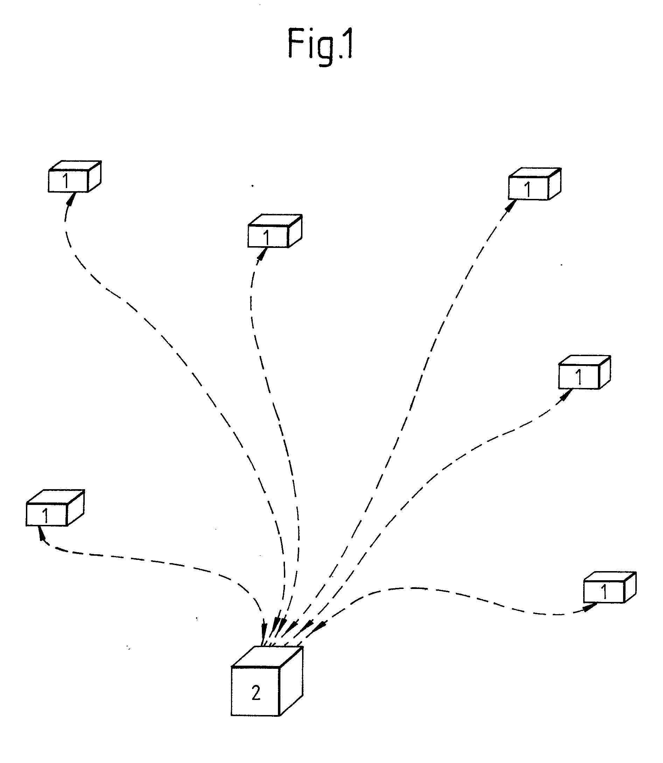

Referring to Figure 1, a mumber of independent monitors 1 are operated under the control of a central master microcomputer 2. If only two monitors are deployed the master microcomputer is not absolutely necessary for possible processing of recorded data to reveal behavioural trends. The master microcomputer is typically a commercial microcomputer, such as an IBM-PC or an Olivetti M24, with custom interface electronics. Unlike the monitors (which would be battery powered), the master microcomputer 2 requires mains power. In operation, each monitor functions under its own real-time calendar clock. The clocks are used to control the acquisition of data and can be used to initiate a synchronised start between several remote monitors, the start-time having been programmed into the monitor some time earlier. Alternatively a synchronised start can be generated by radio-control or by fibre-optic link 3 from the master computer.

When in operation, each monitor 1 draws in ambient air by means of an electric pump, detects and measures each individual particle in the air at high throughput rates by means of laser light scattering, and records the results of each measurement in non-volatile memory.

Each monitor 1 communicates with the central computer 2 via radio or optical fibre links 3 or by means of a removeable memory module.

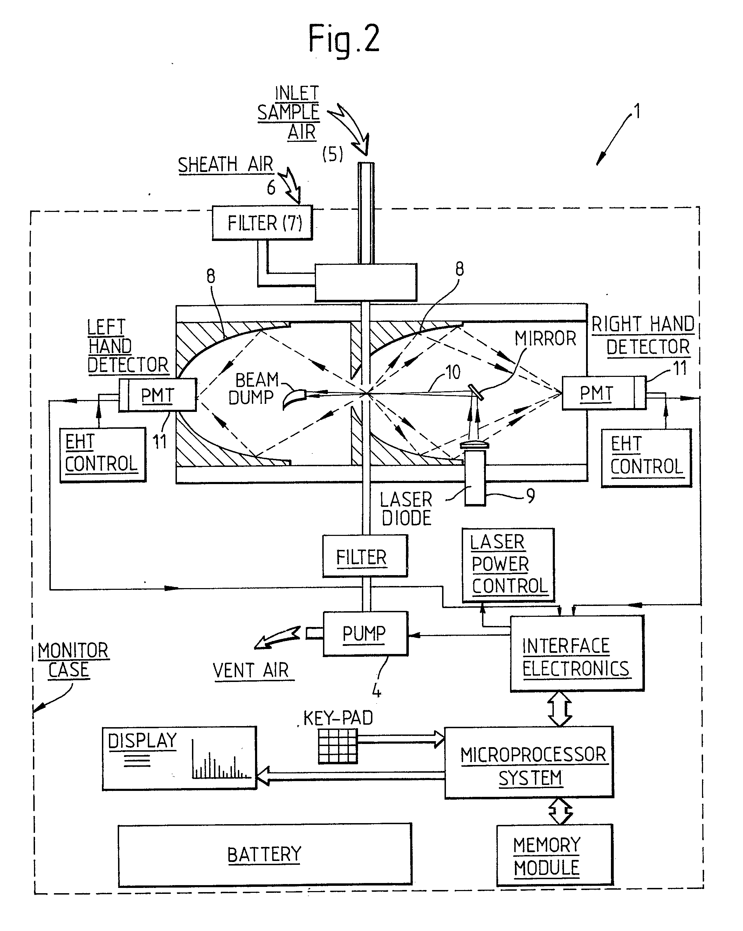

As can be seen from the schematic diagram of a single monitor 1 in Figure 2, an electrically driven pump 4 draws in sample air 5 from the environment together with sheath air 6 through the filter unit 7. The sheath air 6 confines the sample air-stream 5 by means of lamina focussing so that it passes accurately through the scattering volume at the focus of the reflector 8. A laser diode 9 (typically a Philips type 513 CQL) operating at a wavelength of 850nm and a continuous wave power of 20 mW produces an output beam 10 which is focussed so as to intercept orthogonally the same air-stream 5 at the scattering volume. The cross-section of the beam 10 at the inter-section point is approximately 30 μm deep by 4mm across. Particles carried in the sample air-stream 5 generate scattered light pulses as they pass through the laser beam 10 and the reflectors 8 converge this scattered light to light detector points. At these points are placed miniature photomultiplier tube detectors 11 (typically Hammamatsu type R632) which convert the optical pulses to electrical pulses which are then directed to the processing electronic circuitry.

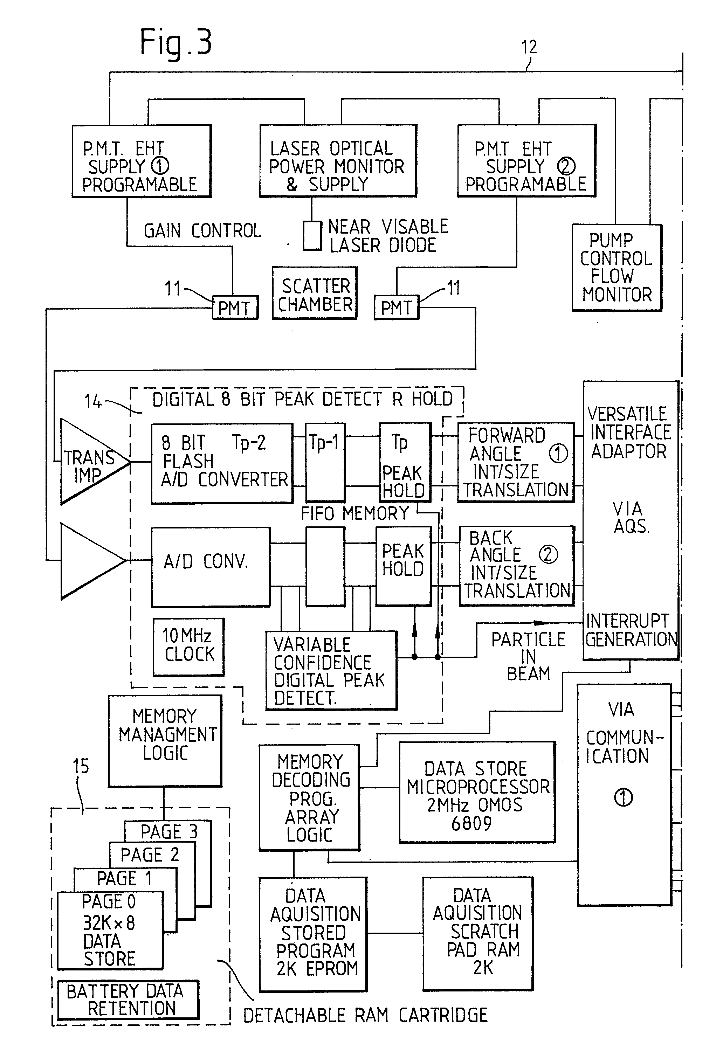

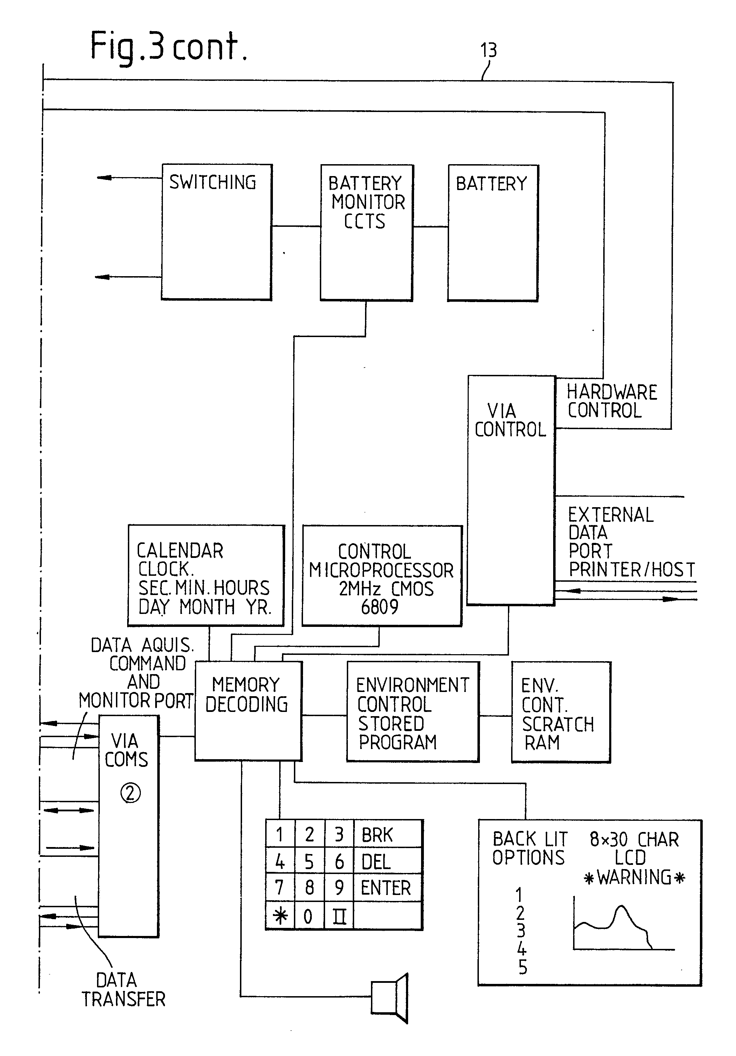

The functional elements of the electronic and computational hardware are depicted in Figure 3. A dual microprocessor system is employed - one committed to data acquisition and recording 12 and the other to system control 13. In operation, current pulses from the photomultiplier detector 11 pass into high-speed digital peak-detect circuits 14 which output binary values corresponding to the maximum value of the pulses. These binary values are then used as addresses to a look-up table which translates the pulse magnitudes to equivalent particle sizes. Each of the (probably 20) size intervals is represented by a 24-bit counter (ie, 0 to 16 million) and the final output histograms, stored in the memory module, show the values of all counters at the end of each integration period.

The memody module 15 comprises pages of random-access-memory (RAM), each of 32K bytes, and numbering up to a possible 256 pages. It is anticipated that no more than 16 pages (or 0.5 MBYTES) of RAM will be necessary.

Each monitor is equipped with a simple key-pad and display, so that operataional parameters can be entered and results can be observed in the field. The memory module 15 of each monitor 1 is preferably removable so that the data can be returned to the master microcomputer 2 (if used) for more detailed processing without disturbing the location of the monitors. Spare memory modules can be plugged into the monitor to continue data collection if required.

The results of the particle detection on each monitor is stored in the form of histograms, each histogram representing the particle size spectrum (ie, number of particles versus size) recorded over a precise time interval or integration period. Associated with each histogram is a time-code and an identity-code for later post-processing use. This integration period is user-definable, and can vary from, say, 100 ms (allowing 10 histrograms to be recorded per second), to several minutes. The data storage capacity of the monitor would normally be sufficiently large for data to be continuously recorded for a period from minutes up to several hours, the only limit being that of the built-in memory capacity, and the battery capacity.

The monitors are designed to detect individual particles in the range of 1 to 15μm equivalent diameter at maximum rates in excess of 30,000 per second, and to size the particles into a number of size windows, typically of 1μm intervals. Additionally there may be over-range and under-range windows. They collect data over user definable integration period which may be varied from 100 ms to 5 minutes, and store the results in non-volatile memory together with elapsed time and identity codes. They can repeat the previous step continuously over a defined run-time which may be varied from 1-10,000 integration periods. The detection run-time of the monitors may be initiated by means of a front-panel switch, a real-time operated delay switch, or, as an optional extra, by remote control using radio or fibre-optic link. The monitors may display on request, using a built-in LCD display, numerical graphical representations of the temporal changes in size spectra recorded over the run-time or any part of the run-time. The monitors are designed to accept user definable alarm conditions and generate an audible (or visual) alarm when these conditions are met. Such conditions may be, for example, a rapid increase in particle count in one or more specified size windows, a particle count which exceeds a pre-specified value, etc. More complex alarm conditions may also be incorporated. For example, the monitor memory could store the size spectrum of a specific aerosol and generate an alarm when the incoming ambient air produces a similar spectrum to within predetermined thresholds. Such conditions would be implemented in software and thus may be modified to suit experimental requirements.

The monitors are also designed to display their current operational status, including overall count rates, battery status, elapsed run-time, specified integration period, alarm conditions in operation etc (to users requirements). The system allows the transfer of recorded numerical data in the memory module 15 to an external printer and also allows it to be removed and interrogated using the remote master microcomputer system.

The nature of the microcomputer system and the post-processing functions it performs could vary for specific experimental conditions, but the functions performed would generally include the following:-The plotting of graphical data representing the change in recorded size spectra from a single monitor as a function of elapsed run-time; the plotting of graphical data representing the change in particle population density in one specific size interval as a function of elapsed run-time; and if data was recorded simultaneously from several monitors placed at specific locations, then graphical data could be plotted representing the change in particle spectra not only as a function of elapsed run-time but also as a function of geographical location.

The embodiment of the invention disclosed above relates to the detection and analysis of Airborne particles, but the Particle Monitoring System could work equally well to detect any Fluid-borne particles with some alterations to the optical scattering chamber.

Although this invention has been described by way of example and with reference to possible embodiments thereof, it is to be understood that modifications or improvements may be made without department from the scope of the invention as defined in the appended claims.

**Claims**

1. A particle monitoring system including a plurality of independent particle monitors spatially separated and under the control of a master computer, wherein each particle monitor employs laser light scattering techniques for detecting and analysing individual particles in its vicinity, and stores the results over a given time period, the stored results being readable by the master computer for processing functions.

2. A particle monitoring system as claimed in Claim 1 wherein one of the particle monitors is the control computer.

3. A particle monitoring system as claimed in Claim 1 or Claim 2 wherein the processing functions include the representation of the stored results as a function of time.

4. A particle monitoring system as claimed in Claim 1 or Claim 2 wherein the processing functions include the representation of the stored results as a function of location.

5. A particle monitoring system as claimed in Claim 3 or Claim 4 wherein the representation of the stored results is a graphical representation.

6. A particle monitoring system as claimed in Claim 3 or Claim 4 wherein the representation of the stored results is by a histogram.

7. A particle monitoring system as claimed in any one of Claims 3 to 6 wherein the representation is of population density of the individual particles detected.

8. A particle monitoring system as claimed in any one of Claims 3 to 6 wherein the representation is of size distribution of the individual particles detected.

9. A particle monitoring system as claimed in any one of Claims 3 to 6 wherein the representation is of dispersion rates.

10. A particle monitoring system as claimed in any previous Claim wherein each particle monitor includes a removeable memory module.

11. A particle monitoring system as claimed in any previous Claim wherein each particle monitor is equipped with a key pad and visual display unit.

12. A particle monitoring system as claimed in any previous Claim wherein the independent particle monitors are connected to the master computer by radio-control or fibre-optic links.

13. A particle monitoring system as claimed in any previous Claim wherein the independent particle monitors act synchronously.

14. A particle monitoring system as claimed in any previous Claim wherein the monitors are capable of responding to a predetermined alarm condition.

15. A particle monitoring system as claimed in any previous Claim wherein the alarm condition is triggered by the increase in particle count above a predetermined level.

16. A particle monitoring system as claimed in Claim 14 wherein the alarm condition is triggered when a predetermined spectrum is identified.

17. A particle monitoring system as claimed in Claim 16 wherein the alarm condition activates an audible or visual alarm or both.

18. A particle monitoring system as herein described with reference to the accompanying drawings.

# Fig.1

# Fig.2

# Fig.3

# Fig.3 cont.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | PATENT ABSTRACTS OF JAPAN, vol. 11, no. 134 (P-571)[2581], 28th April 1987; & JP-A-61 274 241 (HITACHI ELECTRONICS ENG. CO., LTD) 04-12-1986 * Abstract * | 1,12 | G 01 N  15/00 |
| Y,D | GB-A-2 132 767 (M. SALEHI) * Pages 2,6; figure 6 * | 1,12 | |
| A | CONTROL ENGINEERING, vol. 32, no. 1, January 1985, pages 95-96, Barrington, Illinois, US; G.J. BLICKLEY: "Digital process measurements transmitted by fiber optic cables" * Whole article * | 12 | |
| A | D. LUNDGREN et al.: "Aerosol measurement system", 1979, pages 260-267; R.J. SENTELL: "Computer graphics and analysis of atmospheric aerosol size distributions" * Pages 261-264 * | 3-8 | TECHNICAL FIELDS SEARCHED (Int. Cl.4) |
| A | IEEE TRANSACTIONS ON NUCLEAR SCIENCE, vol. 28, no. 1, February 1981, pages 255-257, IEEE, New York, US; E. ANDERSON et al.: "Computer-controlled meteorological monitoring system" * Pages 256-257 * | 1 | G 01 N  15/14 G 01 N  15/02 G 01 N  15/00 G 01 N  21/53 |

The present search report has been drawn up for all claims

| Place of search | Date of completion of the search | Examiner |
|---|---|---|
| THE HAGUE | 09-02-1989 | BOEHM CH.E.D. |